# EUROPEAN PATENT SPECIFICATION

(11) **EP 4 636 298 B1**
(45) Date of publication and mention of the grant of the patent: **14.10.2026**
(21) Application number: 24170607.6
(22) Date of filing: 16.04.2024
(51) Int. Cl.: F17C 7/00, F17C 13/02

(54) **A METHOD FOR CONTROLLING HYDROGEN SUPPLY OF A HYDROGEN TANK OF A VEHICLE**
VERFAHREN ZUR STEUERUNG DER WASSERSTOFFZUFUHR EINES WASSERSTOFFTANKS EINES FAHRZEUGS
PROCÉDÉ DE COMMANDE DE L'ALIMENTATION EN HYDROGÈNE D'UN RÉSERVOIR D'HYDROGÈNE D'UN VÉHICULE

(43) Date of publication of application: 22.10.2025
(73) Proprietor: VOLVO TRUCK CORPORATION, 405 08 Göteborg (SE)
(72) Inventor: DESAI, Parthav, 417 28 Göteborg (SE)
(74) Representative: Kransell & Wennborg KB

(56) References cited:
- EP-A1- 4 202 287
- WO-A1-2024/028638
- WO-A1-2024/038302
- US-A1- 2023 197 987

## Description

### TECHNICAL FIELD

The disclosure relates generally to management of hydrogen tanks of a vehicle comprising a hydrogen consumer. In particular aspects, the disclosure relates to a method for controlling hydrogen supply of a hydrogen tank of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Hydrogen operated vehicles represent a significant advancement in automotive technology, offering a sustainable alternative to fossil fuel-based transportation. These vehicles rely on hydrogen, stored in high-pressure hydrogen tanks, as a fuel source. The hydrogen is consumed by the hydrogen consumer to generate propulsion power or electricity. For example, the hydrogen consumer may be a fuel cell generating electricity to be used in an electric traction machine which propels the vehicle, or it may be a hydrogen internal combustion engine combusting the hydrogen for propulsion power. The storage, management, and maintenance of these hydrogen tanks are critical to the operation, safety, and longevity of fuel cell vehicles. The document WO 2024/038302 A1 discloses a hydrogen tank for a vehicle.

Traditionally, the process of maintaining or replacing hydrogen tanks in such vehicles has been cumbersome and inefficient. When a hydrogen tank requires maintenance or replacement, the standard procedure involves bringing the vehicle to a certified maintenance facility where the hydrogen can be safely vented from the hydrogen tank before any maintenance work begins. This process is not only time-consuming but also leads to significant hydrogen wastage. Moreover, the need to vent hydrogen raises safety concerns, as hydrogen is highly flammable and its release into the atmosphere must be carefully controlled.

There is, therefore, a need for an improved system and method for managing hydrogen tanks in hydrogen operated vehicles that addresses these issues.

### SUMMARY

According to a first aspect of the disclosure, a computer system comprising processing circuitry is provided. The processing circuitry is configured to: receive a maintenance instruction for a first hydrogen tank of a vehicle, the first hydrogen tank being one of a plurality of hydrogen tanks configured to supply hydrogen to a hydrogen consumer of the vehicle; in response to the received maintenance instruction, control the supply of hydrogen from the plurality of hydrogen tanks to the hydrogen consumer by prioritizing supply of hydrogen from the first hydrogen tank; and determine the gas pressure of the first hydrogen tank, and in response to the determined gas pressure being below a predetermined supply pressure threshold, control a hydrogen supply valve for the first hydrogen tank to close to prevent further supply of hydrogen from the first hydrogen tank to the hydrogen consumer. The first aspect of the disclosure may seek to solve problems related to time consuming preparations of a hydrogen tank prior to maintenance of it at a maintenance facility. The first aspect of the disclosure may additionally or alternatively seek to solve problems with undesired waste of hydrogen prior to maintenance of the hydrogen tank. Thus, first aspect of the disclosure may provide a preemptive action by receiving maintenance instructions in advance of a planned maintenance of the first hydrogen tank, enabling more efficient planning for tank maintenance. For example, by first prioritizing supply of hydrogen from the first hydrogen tank, and subsequently preventing supply of hydrogen from the first hydrogen tank when the gas pressure in the first hydrogen tank is below the predetermined supply pressure threshold, the gas pressure in the first hydrogen tank will be reduced prior to maintenance. That is, hydrogen supply from the first hydrogen tank is prioritized until the gas pressure of the first hydrogen tank is below the predetermined supply pressure threshold. In other words, by prioritizing the depletion of hydrogen from a specific tank(s) being subject to planned maintenance, typically while the vehicle remains operational, the downtime for maintenance may be reduced. Moreover, as the use of hydrogen from the hydrogen tank(s) being subject for planned maintenance is prioritized, the amount of hydrogen that needs to be vented, if at all, is reduced. The reduction of the gas pressure of the first hydrogen tank may also improve the safety during subsequent maintenance of the hydrogen tank. A technical benefit may include improved fuel efficiency and/or reduced maintenance time, and/or improved safety. The predetermined supply pressure threshold may e.g. correspond to the minimum required gas pressure for the hydrogen consumer, or hydrogen supply system thereof.

Optionally in some examples, including in at least one preferred example, the processing circuitry is further configured to: prioritize supply of hydrogen from the first hydrogen tank in response to the determined gas pressure of the first hydrogen tank being above the predetermined supply pressure threshold. A technical benefit may include ensuring a desired, or at least minimum, gas pressure for the hydrogen consumer, or hydrogen supply system thereof.

Optionally in some examples, including in at least one preferred example, the processing circuitry is further configured to: prioritize supply of hydrogen from the first hydrogen tank by performing a preventive action for supplying hydrogen from the plurality of hydrogen tanks other than the first hydrogen tank to the hydrogen consumer. A technical benefit may include an automated control of hydrogen supply to prioritize hydrogen supply from the first hydrogen tank.

Optionally in some examples, including in at least one preferred example, the processing circuitry is further configured to: perform the preventive action by controlling one or more hydrogen supply valves of the plurality of hydrogen tanks other than the first hydrogen tank to close, or at least partly close, to prevent or at least reduce the supply of hydrogen from the plurality of hydrogen tanks other than the first hydrogen tank. A technical benefit may include an improved control of hydrogen supply to prioritize hydrogen supply from the first hydrogen tank. In other words, the hydrogen supply valves of the plurality of hydrogen tanks other than the first hydrogen tank is controlled to a fully closed state, or controlled to a partly closed state.

Optionally in some examples, including in at least one preferred example, the processing circuitry is further configured to: perform the preventive action until the gas pressure of the first hydrogen tank is below the predetermined supply pressure threshold. A technical benefit may include an automated control of hydrogen supply at least up until the hydrogen supply from the first hydrogen tank is stopped, or prevented.

Optionally in some examples, including in at least one preferred example, the processing circuitry is further configured to: in response to the determined gas pressure of the first hydrogen tank being below the predetermined supply pressure threshold, control one or more hydrogen supply valves of the plurality of hydrogen tanks other than the first hydrogen tank to open to supply hydrogen from the plurality of hydrogen tanks other than the first hydrogen tank to the hydrogen consumer. A technical benefit may include an automated control of hydrogen supply subsequent to the hydrogen supply from the first hydrogen tank is stopped, or prevented.

Optionally in some examples, including in at least one preferred example, the processing circuitry is further configured to: in response to the determined gas pressure being below the predetermined supply pressure threshold and above a predetermined venting pressure threshold, control a venting valve for the first hydrogen tank to open to vent residual hydrogen from the first hydrogen tank to the atmosphere. A technical benefit may include reduced maintenance time and/or improved safety during the subsequent maintenance of the first hydrogen tank. Typically, the venting valve is controlled to be open until the gas pressure in the first hydrogen tank is at, or below, the predetermined venting pressure threshold. The predetermined venting pressure threshold typically corresponds to gas pressure for which maintenance of the first hydrogen tank is safe, or comply with safety regulations. Thus, the gas pressure in the first hydrogen tank may be brought down to safe levels before maintenance, ensuring compliance with safety regulations and standards for hydrogen tank maintenance. It should be noted that the processing circuitry is typically configured to control the venting valve, i.e. to control the degree of venting by opening and closing the venting valve, independently of the gas pressure in the first hydrogen tank (e.g. regardless of if the determined gas pressure is below or above the predetermined supply pressure threshold and above or below the predetermined venting pressure threshold).

Optionally in some examples, including in at least one preferred example, the processing circuitry is further configured to: receive a safe venting instruction, and in response to the received safe venting instruction, control the venting valve for the first hydrogen tank to open. A technical benefit may include improved safety during venting of the hydrogen from the first hydrogen tank.

Optionally in some examples, including in at least one preferred example, the safe venting instruction is at least based on that the vehicle is in motion. A technical benefit may include improved safety during venting of the hydrogen from the first hydrogen tank. By controlling venting to when the vehicle at least is in motion, the risk of releasing hydrogen in an inappropriate time or location is reduced. The safety venting instruction may be further based on that the vehicle is not positioned in a confined space, such as e.g. in a tunnel or in a building.

Optionally in some examples, including in at least one preferred example, the processing circuitry is further configured to: receive a hydrogen tank maintenance destination of the vehicle, and to control the venting valve to open prior to the vehicle reaching the hydrogen tank maintenance destination. A technical benefit may include reduced maintenance time and/or improved safety during the subsequent maintenance of the first hydrogen tank. Typically, the venting valve is controlled to be open until the gas pressure in the first hydrogen tank is at, or below, the predetermined venting pressure threshold, and/or is within a predetermined distance, or is within an estimated time of arrival, of the hydrogen tank maintenance destination, e.g. within 1 km of the hydrogen tank maintenance destination, or within 10 minutes of the estimated time of arrival at the hydrogen tank maintenance destination . Thus, the gas pressure in the first hydrogen tank may be brought down to safe levels before the vehicle reaches the hydrogen tank maintenance destination. In general, information related to the hydrogen tank maintenance destination may be received from a central server, a logistics controller, a fleet planner, or similar. For example, information of the hydrogen tank maintenance destination may be comprised in a scheduled route of the vehicle, and/or may be based on GPS and/or map data to determine the distance to the hydrogen tank maintenance destination, and/or the time of arrival at the hydrogen tank maintenance destination.

Optionally in some examples, including in at least one preferred example, the processing circuitry is further configured to: in response to the received maintenance instruction, control the refueling of hydrogen to the first hydrogen tank. A technical benefit may include improved fuel efficiency and/or reduced maintenance time, and/or improved safety. Thus, by controlling the refueling of hydrogen to the first hydrogen tank which is subject to planned maintenance, the gas pressure in the first hydrogen tank can be controlled. For example, the processing circuitry may be configured to: in response to the received maintenance instruction, prevent refueling of hydrogen to the first hydrogen tank.

Optionally in some examples, including in at least one preferred example, the processing circuitry is further configured to: control the refueling of hydrogen to the first hydrogen tank by closing a refueling valve for the first hydrogen tank. A technical benefit may include an automated control of preventing refueling of the first hydrogen tank which is subject to planned maintenance.

Optionally in some examples, including in at least one preferred example, the refueling valve and hydrogen supply valve for the first hydrogen tank are forming a combined valve. A technical benefit may include a compact design for the refueling valve and hydrogen supply valve. Regardless of if the refueling valve and hydrogen supply valve for the first hydrogen tank are forming a combined valve or not, it should be noted that the hydrogen supply valve is typically the valve controlling supply of hydrogen from the first hydrogen tank to the hydrogen consumer, and the refueling valve is the valve controlling refueling of hydrogen from a hydrogen source to the first hydrogen tank.

Optionally in some examples, including in at least one preferred example, the maintenance instruction is indicative of a need to bring the gas pressure of the first hydrogen tank to a safe level. A technical benefit may include suitable responsive actions for planned maintenance of the first hydrogen tank. The maintenance instruction may e.g. be indicative of removal and/or maintenance of the first hydrogen tank, for which the gas pressure of the first hydrogen tank preferably should be at safe levels. A safe level of the gas pressure of the first hydrogen tank may e.g. be between 2 bar and 5 bar. This pressure level may e.g. correspond to the previously mentioned predetermined venting pressure threshold. That is, the predetermined venting pressure threshold may be set to value between 2 bar and 5 bar. In at least some examples, the gas pressure of the first hydrogen tank is brought to atmospheric, or near atmospheric pressures (e.g. in order to be opened to the atmosphere). An indication of a need to bring the gas pressure of the first hydrogen tank to a safe level may be based on a need to perform maintenance of the first hydrogen tank and/or to remove the first hydrogen tank. That is, an indication of a need to bring the gas pressure of the first hydrogen tank to a safe level may be based on a need to perform maintenance of the first hydrogen tank, and/or remove the first hydrogen tank from the vehicle. In general, the maintenance information may be received from a central server, a logistics controller, a fleet planner, or similar. Such information may alternatively be received from the same or a different computer system configured to collect vehicle information data, such as vehicle sensor data, traffic data, vehicle location data and weather data and to determine the information based on the collected information. It should be noted that the vehicle may comprise a warning system for when one of the plurality of hydrogen tanks has a lower gas pressure compared to the others, as will be the case when hydrogen supply from the first hydrogen tank is prioritized over the other hydrogen tanks. For such cases, the processing circuitry may be configured to mute, or turn off, such warning system in response to the receiving the maintenance instruction for the first hydrogen tank.

Optionally in some examples, including in at least one preferred example, the hydrogen consumer is a fuel cell. Optionally in some examples, including in at least one preferred example, the hydrogen consumer is a hydrogen internal combustion engine, such as a clean combustion engine. Optionally in some examples, including in at least one preferred example, the plurality of hydrogen tanks are carbon fiber tanks. That is, the plurality of hydrogen tanks may be made out of carbon fiber. For example, the plurality of hydrogen tanks may be made by winding carbon fiber tightly around a cylinder housing.

According to a second aspect of the disclosure, a vehicle comprising the computer system of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

According to a third aspect of the disclosure, a computer-implemented method is provided. The computer implemented method comprises: receiving, by processing circuitry of a computer system, a maintenance instruction for a first hydrogen tank of a vehicle, the first hydrogen tank being one of a plurality of hydrogen tanks configured to supply hydrogen to a hydrogen consumer of the vehicle; controlling, by the processing circuitry, the supply of hydrogen from the plurality of hydrogen tanks to the hydrogen consumer by prioritizing supply of hydrogen from the first hydrogen tank in response to the received maintenance instruction; and determining, by the processing circuitry, the gas pressure of the first hydrogen tank, and controlling, by the processing circuitry, a hydrogen supply valve for the first hydrogen tank to close in response to the determined gas pressure being below a predetermined supply pressure threshold, to prevent further supply of hydrogen from the first hydrogen tank to the hydrogen consumer. Effects and features of the second aspect of the disclosure are largely analogous to those described above in connection with the first aspect of the disclosure. Embodiments mentioned in relation to the first aspect of the disclosure are largely compatible with the second aspect of the disclosure, of which some are exemplified below, typically without repeating the technical benefits thereof.

Optionally in some examples, including in at least one preferred example, the method further comprises: controlling, by the processing circuitry, the refueling of hydrogen to the first hydrogen tank in response to the received maintenance instruction.

Optionally in some examples, including in at least one preferred example, the method further comprise: closing, by the processing circuitry, a refueling valve for the first hydrogen tank in order to control the refueling of hydrogen to the first hydrogen tank.

According to a fourth aspect of the disclosure, a computer program product comprising program code for performing, when executed by the processing circuitry, the method of the first aspect of the disclosure is provided. The fourth aspect of the disclosure may seek to solve the same problem as described for the first aspect of the disclosure. Thus, effects and features of the fourth aspect of the disclosure are largely analogous to those described above in connection with the first aspect of the disclosure.

According to a fifth aspect of the disclosure, a non-transitory computer-readable storage medium comprising instructions, which when executed by the processing circuitry, cause the processing circuitry to perform the method of the first aspect of the disclosure is provided. The fifth aspect of the disclosure may seek to solve the same problem as described for the first aspect of the disclosure. Thus, effects and features of the fifth aspect of the disclosure are largely analogous to those described above in connection with the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary, partly schematic, side view of vehicle comprising a hydrogen consumer and a plurality of hydrogen tanks arranged to supply hydrogen to the hydrogen consumer according to one example.
**FIG. 2** is a schematic view of a hydrogen supply system for the vehicle 1 of Fig. 1 according to one example.
**FIG. 3** is a flowchart illustrating the actions or steps of a method according to one example.
**FIG. 4** is a schematic diagram of an exemplary computer system for implementing examples disclosed herein, according to one example.

Examples are described in more detail below with reference to the appended drawings.

### DETAILED DESCRIPTION

The detailed description set forth below provides information and examples of the disclosed technology with sufficient detail to enable those skilled in the art to practice the disclosure.

The disclosed technology may solve problems related to time consuming maintenance of at least one hydrogen tank of a vehicle. The disclosed technology may additionally or alternatively solve problems with undesired waste of hydrogen prior to maintenance of the at least one hydrogen tank. The disclosed technology provide preemptive actions by receiving maintenance instructions in advance of a planned maintenance of a first hydrogen tank, by prioritizing supply of hydrogen from the first hydrogen tank, and subsequently preventing supply of hydrogen from the first hydrogen tank to the hydrogen consumer when the gas pressure in the first hydrogen tank is below a predetermined supply pressure threshold. Hereby, the gas pressure in the first hydrogen tank will be reduced prior to the planned maintenance. Thus, hydrogen supply from the first hydrogen tank is prioritized to operate the hydrogen consumer during vehicle operation until the gas pressure of the first hydrogen tank is below the predetermined supply pressure threshold. Hereby, the downtime for maintenance may be reduced. Moreover, as the use of hydrogen from the first hydrogen tank is prioritized, the amount of hydrogen that needs to be vented, if at all, prior to the planned maintenance is reduced. The reduction of the gas pressure of the first hydrogen tank prior to the planned maintenance may also improve the safety during subsequent maintenance of the hydrogen tank. A technical benefit may include improved fuel efficiency and/or reduced maintenance time, and/or improved safety.

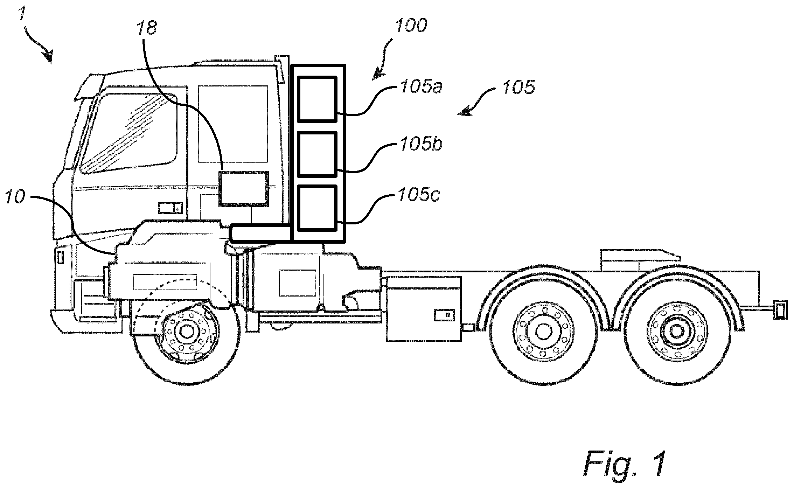

**FIG.** 1 shows a vehicle 1 in the form of an exemplary heavy duty truck. The vehicle 1 illustrated in Fig. 1 comprises a hydrogen consumer 10, here in the form of a fuel cell. The fuel cell is configured to convert hydrogen to electricity, e.g. to power an electric traction machine of the vehicle 1. However, it should be noted that the hydrogen consumer 10 may be an internal combustion engine configured to combust hydrogen for propulsion power of the vehicle 1. The hydrogen consumer 10 is configured to consume a pressurized gaseous fuel producing water as by-product. The hydrogen consumer 10 is powered by pressurized gaseous hydrogen supplied by a plurality of hydrogen tanks 105, here exemplified as a first hydrogen tank 105a, a second hydrogen tank 105b and a third hydrogen tank 105c comprised in a hydrogen supply system 100.

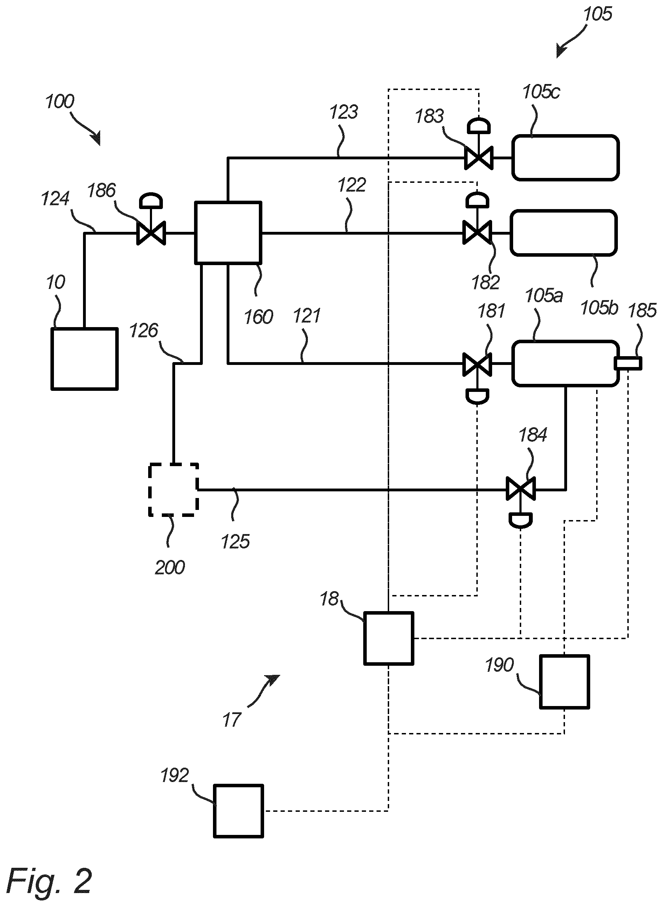

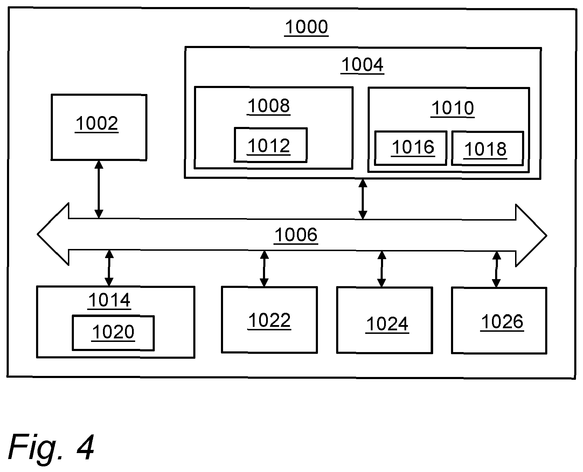

The vehicle 1 comprises a processing circuitry 18 comprised in a computer system (shown in Figs. 2 and 4) configured to control at least some of the operation of the hydrogen supply system 100, such as e.g. the individual control of hydrogen supply from the first, second and third hydrogen tanks 105a, 105b, 105c to the hydrogen consumer 10.

In **FIG. 2****,** the hydrogen supply system 100 of Fig. 1 is shown in more detail. The hydrogen supply system 100 comprises the previously mentioned plurality of hydrogen tanks 105 storing pressurized gaseous hydrogen, and a first supply line 121 arranged to supply pressurized hydrogen from the first hydrogen tank 105a to the hydrogen consumer 10. The first hydrogen tank 105a is fluidly coupled to a first hydrogen supply valve 181 arranged in the first supply line 121. The first hydrogen supply valve 181 is a controllable valve being configured to control the flow of pressurized hydrogen in the first supply line 121. Correspondingly, the hydrogen supply system 100 comprises a second supply line 122 arranged to supply pressurized hydrogen from the second hydrogen tank 105b to the hydrogen consumer 10. The second hydrogen tank 105b is fluidly coupled to a second hydrogen supply valve 182 arranged in the second supply line 122, and a third supply line 123 arranged to supply pressurized hydrogen from the third hydrogen tank 105c to the hydrogen consumer 10. The third hydrogen tank 105c is fluidly coupled to a third hydrogen supply valve 183 arranged in the third supply line 123. The second and third hydrogen supply valves 182, 183 are a controllable valves being configured to control the flow of pressurized hydrogen in the second supply line 122 and the third supply line 123, respectively. The first, second and third supply lines 121, 122, 123 may be separate supply lines that do not overlap with each other.

As shown in Fig. 2, all of the first, second and third supply lines 121, 122, 123 are connected to, or converges into, a common hydrogen supply unit 160, e.g. a buffer tank, arranged upstream of the hydrogen consumer 10. The common hydrogen supply unit 160 is fluidly connected to the hydrogen consumer 10 by a common hydrogen supply line 124 and an associated common hydrogen supply valve 186, e.g. being a pressure regulating supply valve. However, it should be noted that each one of the first, second and third supply lines 121, 122, 123 may be directly connected to the hydrogen consumer 10, and that the common hydrogen supply unit 160, the common hydrogen supply line 124 and the common hydrogen supply valve 186 may be omitted.

As also shown in Fig. 2, the hydrogen supply system 100 may comprise a first refueling line 125 configured to supply hydrogen from a hydrogen source 200 (typically not included in the hydrogen supply system) to the first hydrogen tank 105a. The hydrogen source 200 may e.g. be a hydrogen pump at a hydrogen refueling facility. The first hydrogen tank 105a is fluidly coupled to a refueling hydrogen valve 184 arranged in the first refueling line 125. The refueling hydrogen valve 184 is a controllable valve being configured to control the flow of pressurized hydrogen in the first refueling line 125 from the hydrogen source 200 to the first hydrogen tank 105a. It should be noted that all of the plurality of hydrogen tanks 105 may comprise a corresponding refueling line and associated refueling hydrogen valve. Additionally or alternatively, the hydrogen supply system may comprise a common refueling line 126 configured to supply hydrogen from the hydrogen source 200 to the common hydrogen supply unit 160, and further to the first, second and/or third hydrogen tanks 105a, 105b, 105c via the first, second and third supply lines 121, 122, 123 and associated first, second and third hydrogen supply valves 181, 182, 183. In such cases, the first, second and third hydrogen supply valves 181, 182, 183 will be corresponding combined hydrogen supply valves and refueling valves.

The first hydrogen tank 105a comprises a venting valve 185. The venting valve 185 may be a controllable valve being configured to control the flow of hydrogen from the first hydrogen tank 105a to the atmosphere (i.e. venting of the first hydrogen tank 105a). Even though not shown in Fig. 2, any one or both of the second and third hydrogen tanks 105b, 105c may comprise a corresponding venting valve.

In Fig. 2, a computer system 17 comprising a processing circuitry 18 is shown. The computer system 17 may e.g. be comprised in, or comprise, an electrical control unit (ECU) of the vehicle. As an alternative, the computer system 17 may be comprised of both onboard and offboard control units. The processing circuitry 18 may be configured to control the flow of the of pressurized hydrogen in the first, second and third supply lines 121, 122, 123 by controlling the first, second, third hydrogen supply valves 181, 182, 183, and/or by controlling the common hydrogen supply valve 186. That is, the processing circuitry 18 may be configured to control supply of pressurized hydrogen from the first hydrogen tank 105a to the hydrogen consumer 10 using the first supply line 121 by opening the first hydrogen supply valve 181, and opening the common hydrogen supply valve 186 (if present) while closing the second and third hydrogen supply valves 182, 183. Correspondingly, the processing circuitry 18 may be configured to control supply of pressurized hydrogen from the second hydrogen tank 105b to the hydrogen consumer 10 using the second supply line 122 by opening the second hydrogen supply valve 182, and be configured to control supply of pressurized hydrogen from the third hydrogen tank 105c to the hydrogen consumer 10 using the third supply line 123 by opening the third hydrogen supply valve 183, and opening the common hydrogen supply valve 186 (if present) while closing the first hydrogen supply valve 181. Moreover, the processing circuitry 18 may be configured to control the refueling of hydrogen to the first, second and/or third hydrogen tanks 105a, 105b, 105c by opening and closing the first refueling valve 184, and/or the first, second and third hydrogen supply valves 181, 182, 183 depending on the refueling route.

When maintenance is to be performed for one or more of the hydrogen tanks 105, typically a maintenance in which the gas pressure of the one or more hydrogen tanks 105 needs to be brought to a safe level, e.g. for removal of the one or more hydrogen tanks 105, the vehicle is typically brought to a maintenance destination, such as a certified maintenance facility, at which the maintenance of the one or more of the hydrogen tanks 105 is carried out. In order to avoid, or at least reduce, the downtime due to maintenance (i.e. the maintenance time) at the maintenance facility, and/or in order to avoid, or at least reduce, the waste of hydrogen gas due to venting the one or more hydrogen tanks 105 at the maintenance facility, one or more preemptive actions may be performed, which will be described in the following. In the following, only the first hydrogen tank 105a is subject to planned maintenance, but it should be noted that any one of the hydrogen tanks 105, or several of the hydrogen tanks 105, may be subject to planned maintenance in a corresponding manner.

In more detail, the processing circuitry 18 is configured to receive a maintenance instruction 190 for the first hydrogen tank 105a. As previously mentioned, the maintenance instruction 190 is typically indicative of a need to bring the gas pressure of the first hydrogen tank 105a to a safe level (e.g. somewhere between 2 bar and 5 bar), e.g. for removal of the first hydrogen tank 105a. In response to the received maintenance instruction 190, the processing circuitry 18 is configured to control the supply of hydrogen from the plurality of hydrogen tanks 105 to the hydrogen consumer 10 by prioritizing supply of hydrogen from the first hydrogen tank 105a. This may e.g. be achieved by that the processing circuitry 18 controls the opening of the first hydrogen valve 181 e.g. to a fully opened state. Moreover, the processing circuitry 18 may be further configured to perform a preventive action for supplying hydrogen from the second and third hydrogen tanks 105b, 105c, i.e. the hydrogen tanks 105b, 105c of the plurality of hydrogen tanks 105 not being subject to planned maintenance (i.e. not being included in the maintenance instruction 190). The preventive action may e.g. be achieved by that the processing circuitry 18 controls the second and third hydrogen supply valves 182, 183 to close, or at least partly close, to prevent or at least reduce the supply of hydrogen from the second and third hydrogen tanks 105b, 105c.

The processing circuitry 18 may be further configured to determine the gas pressure of the first hydrogen tank 105a. The gas pressure of the first hydrogen tank 105a typically corresponds to the amount of hydrogen stored in the first hydrogen tank 105a. The prioritizing of the supply of hydrogen from the first hydrogen tank 105a is typically achieved in response to that the determined gas pressure of the first hydrogen tank 105a is above a predetermined supply pressure threshold. Hereby, a desired, or at least minimum, gas pressure for the hydrogen consumer 10, or hydrogen supply system 100 thereof, can be ensured when prioritizing hydrogen supply from the first hydrogen tank 105a.

The processing circuitry 18 may be further configured to control the first hydrogen supply valve 181 to close to prevent further supply of hydrogen from the first hydrogen tank 105a to the hydrogen consumer 10 in response to the determined gas pressure of the first hydrogen tank 105 being below the predetermined supply pressure threshold. Hereby, hydrogen supply from the first hydrogen tank 105a is prioritized until the gas pressure of the first hydrogen tank 105a is below the predetermined supply pressure threshold. Thus, the processing circuitry 18 may be configured to perform the previously preventive action for supplying hydrogen from the second and third hydrogen tanks 105b, 105c until the gas pressure of the first hydrogen tank 105a is below the predetermined supply pressure threshold. Thereafter, i.e. in response to the determined gas pressure of the first hydrogen tank 105a is below the predetermined supply pressure threshold, the processing circuitry may be configured to control the second hydrogen supply valve 182 and/or the third hydrogen supply valve 183 to open to supply hydrogen from the second hydrogen tank 105b and/or the third hydrogen tank 105c to the hydrogen consumer 10.

However, as the gas pressure of the first hydrogen tank 105a may still be above a gas pressure being safe for performing maintenance of the first hydrogen tank 105a, e.g. a gas pressure higher than the safe level, the processing circuitry 18 may be further configured to control venting of the first hydrogen tank 105a. In more detail, the processing circuitry 18 may be configured to control the venting valve 185 for the first hydrogen tank 105a to open to vent residual hydrogen from the first hydrogen tank 105a to the atmosphere in response to the determined gas pressure is below the predetermined supply pressure threshold and above a predetermined venting pressure threshold. The predetermined venting pressure threshold may e.g. correspond to a gas pressure for which maintenance of the first hydrogen tank 105a is safe, i.e. a safe level, or comply with safety and standard regulations, e.g. a value between 2 bar and 5 bar. The venting of the first hydrogen tank 105a may be further controlled by applying further safety measures. For example, the processing circuitry 18 may be further configured to receive a safe venting instruction 192, and in response to the received safe venting instruction 192, control the venting valve 185 for the first hydrogen tank 105a to open. The safe venting instruction 192 may e.g. be based on that the vehicle 1 is in motion, and/or that the vehicle 1 is not positioned in a confined space.

Additionally or alternatively, the processing circuitry 18 may be configured to receive a hydrogen tank maintenance destination of the vehicle 1, and to control the venting valve 185 to open prior to the vehicle 1 reaching the hydrogen tank maintenance destination. Hereby, the venting valve 185 may be controlled to be open until the gas pressure in the first hydrogen tank 105a is at, or below, the predetermined venting pressure threshold, and/or is within a predetermined distance of the hydrogen tank maintenance destination, e.g. within 1-5 km of the hydrogen tank maintenance destination. Thus, the gas pressure in the first hydrogen tank 105a may be brought down to safe levels before the vehicle reaches the hydrogen tank maintenance destination. The hydrogen tank maintenance destination may e.g. be the previously described certified maintenance facility.

Additionally or alternatively, the processing circuitry 18 may be configured to control the refueling of hydrogen to the first hydrogen tank 105a. In particular, the processing circuitry 18 may be configured to prevent refueling of hydrogen to the first hydrogen tank 105a in response to the received maintenance instruction 190. For example, the processing circuitry 18 may be configured to control the refueling of hydrogen to the first hydrogen tank 105a by closing the first refueling valve 184, and/or the first hydrogen supply valve 181, depending on the refueling route. It should be noted that in case the first hydrogen supply valve 181 is combined with the first refueling valve, the processing circuitry 18 may be configured to control the refueling of hydrogen to the first hydrogen tank 105a by closing the first hydrogen supply valve 181 during a refueling event. After such refueling event, the processing circuitry 18 may be configured to control the first hydrogen supply valve 181 in line with prioritizing hydrogen supply from the first hydrogen tank 105a as previously explained.

The hydrogen consumer 10 may be configured to receive gaseous fuel at a changeable demanded injection pressure being above a predetermined minimum required injection pressure and below a predetermined maximum required injection pressure. The minimum required injection pressure of the hydrogen consumer 10, being a fuel cell as in Fig. 2, may e.g. be at least 3 bar. The changeable demanded injection pressure may e.g. be controlled by an injection pressure regulator (not shown) arranged upstream of the hydrogen consumer 10. Depending on the pressure of the hydrogen tanks 105, the processing circuitry 18 may operate the controllable valves 181, 182, 183, 184, 185, 186 to achieve the demanded injection pressure of the hydrogen consumer 10. The processing circuitry 18 may be configured to receive, or determine, the pressure of the hydrogen in the respective hydrogen tanks 105 e.g. by means of corresponding pressure sensors (not shown). The previously mentioned predetermined supply pressure threshold for the first hydrogen tank 105a may e.g. correspond to the minimum required injection pressure of the hydrogen consumer 10 (e.g. being set to the minimum required injection pressure of the hydrogen consumer 10 and including any pressure losses between the first hydrogen tank 105a and the hydrogen consumer 10).

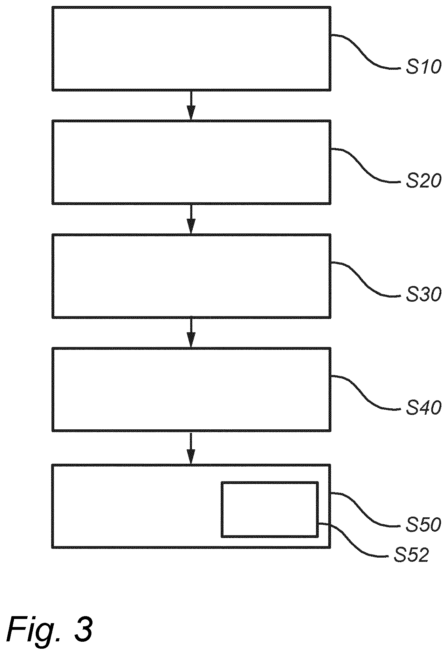

**FIG. 3** is a flow chart of a computer implemented method for controlling hydrogen supply of a first hydrogen tank of a vehicle, the first hydrogen tank being one of a plurality of hydrogen tanks configured to supply hydrogen to a hydrogen consumer of the vehicle.

In a first action or step, S10, a maintenance instruction for the first hydrogen tank of the vehicle is received by a processing circuitry of a computer system. The maintenance instruction for the first hydrogen tank is typically indicative of a need to bring the gas pressure of the first hydrogen tank to a safe level, e.g. for removal of the first hydrogen tank.

In a second action or step, S20, occurring subsequently to the first action or step S10 and in response to the received maintenance instruction, the supply of hydrogen from the plurality of hydrogen tanks to the hydrogen consumer is controlled by the processing circuitry by prioritizing supply of hydrogen from the first hydrogen tank. As described with reference to Fig. 2, this may e.g. be achieved by that the processing circuitry 18 controls the opening of the first hydrogen valve 181 e.g. to a fully opened state, and by performing a preventive action for supplying hydrogen from the second and third hydrogen tanks 105b, 105c, i.e. the hydrogen tanks 105b, 105c of the plurality of hydrogen tanks 105 not being subject to planned maintenance. The preventive action may e.g. be achieved by that the processing circuitry 18 controls the second and third hydrogen supply valves 182, 183 to close, or at least partly close, to prevent or at least reduce the supply of hydrogen from the second and third hydrogen tanks 105b, 105c.

In a third action or step, S30, e.g. occurring subsequently (but potentially at least partly simultaneously) to the second action or step S20, the gas pressure of the first hydrogen tank is determined by the processing circuitry. This may e.g. be achieved by receiving data of the gas pressure of the first hydrogen tank from a gas pressure sensor arranged in the first hydrogen tank.

In a fourth action or step, S40, e.g. occurring subsequently to the second action or step S20, a hydrogen supply valve for the first hydrogen tank is controlled to close by the processing circuitry in response to the determined gas pressure being below a predetermined supply pressure threshold, to prevent further supply of hydrogen from the first hydrogen tank to the hydrogen consumer.

In an optional fifth action or step, S50, occurring subsequently to the first action or step S10 (but potentially at least partly simultaneously to the second and third actions or steps S20, S30) and in response to the received maintenance instruction, the refueling of hydrogen to the first hydrogen tank is controlled by the processing circuitry. As described with reference to Fig. 2, this may e.g. be achieved by that the processing circuitry 18 controls the first refueling valve 184, and/or the first hydrogen supply valve 181, depending on the refueling route.

In an optional sub-action or sub-step, S52, to the optional fifth action or step, S50, the refueling valve for the first hydrogen tank is closed by the processing circuitry in order to control the refueling of hydrogen to the first hydrogen tank.

**FIG. 4** is a schematic diagram of a computer system 1000 for implementing examples disclosed herein, e.g. the method as described with reference to Fig. 3. The computer system 1000 may correspond to, or be implemented in, the computer system 17 of Fig. 2. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processing circuitry 1002 (e.g., processing circuitry including one or more processor devices or control units; e.g. corresponding to the processing circuitry 18 of Fig. 2), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system comprising processing circuitry configured to: receive a maintenance instruction for a first hydrogen tank of a vehicle, the first hydrogen tank being one of a plurality of hydrogen tanks configured to supply hydrogen to a hydrogen consumer of the vehicle; in response to the received maintenance instruction, control the supply of hydrogen from the plurality of hydrogen tanks to the hydrogen consumer by prioritizing supply of hydrogen from the first hydrogen tank; and determine the gas pressure of the first hydrogen tank, and in response to the determined gas pressure being below a predetermined supply pressure threshold, control a hydrogen supply valve for the first hydrogen tank to close to prevent further supply of hydrogen from the first hydrogen tank to the hydrogen consumer.

Example 2. The computer system of example 1, wherein the processing circuitry is further configured to: prioritize supply of hydrogen from the first hydrogen tank in response to the determined gas pressure of the first hydrogen tank being above the predetermined supply pressure threshold.

Example 3. The computer system of any of examples 1-2, wherein the processing circuitry is further configured to: prioritize supply of hydrogen from the first hydrogen tank by performing a preventive action for supplying hydrogen from the plurality of hydrogen tanks other than the first hydrogen tank to the hydrogen consumer.

Example 4. The computer system of example 3, wherein the processing circuitry is further configured to: perform the preventive action by controlling one or more hydrogen supply valves of the plurality of hydrogen tanks other than the first hydrogen tank to close, or at least partly close, to prevent or at least reduce the supply of hydrogen from the plurality of hydrogen tanks other than the first hydrogen tank.

Example 5. The computer system of example 4, wherein the processing circuitry is further configured to: perform the preventive action until the gas pressure of the first hydrogen tank is below the predetermined supply pressure threshold.

Example 6. The computer system of any of examples 1-5, wherein the processing circuitry is further configured to: in response to the determined gas pressure of the first hydrogen tank being below the predetermined supply pressure threshold, control one or more hydrogen supply valves of the plurality of hydrogen tanks other than the first hydrogen tank to open to supply hydrogen from the plurality of hydrogen tanks other than the first hydrogen tank to the hydrogen consumer.

Example 7. The computer system of any of examples 1-6, wherein the processing circuitry is further configured to: in response to the determined gas pressure being below the predetermined supply pressure threshold and above a predetermined venting pressure threshold, control a venting valve for the first hydrogen tank to open to vent residual hydrogen from the first hydrogen tank to the atmosphere.

Example 8. The computer system of example 7, wherein the processing circuitry is further configured to: receive a safe venting instruction, and in response to the received safe venting instruction, control the venting valve for the first hydrogen tank to open.

Example 9. The computer system of example 8, wherein the safe venting instruction is at least based on that the vehicle is in motion.

Example 10. The computer system of any of examples 7-9, wherein the processing circuitry is further configured to: receive a hydrogen tank maintenance destination of the vehicle, and to control the venting valve to open prior to the vehicle reaching the hydrogen tank maintenance destination.

Example 11. The computer system of any of examples 1-10, wherein the processing circuitry is further configured to: in response to the received maintenance instruction, control the refueling of hydrogen to the first hydrogen tank.

Example 12. The computer system of example 11, wherein the processing circuitry is further configured to: control the refueling of hydrogen to the first hydrogen tank by closing a refueling valve for the first hydrogen tank.

Example 13. The computer system of example 12, wherein the refueling valve and hydrogen supply valve for the first hydrogen tank are forming a combined valve.

Example 14. The computer system of any of examples 1-13, wherein the maintenance instruction is indicative of a need to bring the gas pressure of the first hydrogen tank to a safe level, e.g. for removal and/or maintenance of the first hydrogen tank.

Example 15. A vehicle comprising the computer system of any of examples 1-14.

Example 16. A computer-implemented method, comprising: receiving, by a processing circuitry of a computer system, a maintenance instruction for a first hydrogen tank of a vehicle, the first hydrogen tank being one of a plurality of hydrogen tanks configured to supply hydrogen to a hydrogen consumer of the vehicle; controlling, by the processing circuitry, the supply of hydrogen from the plurality of hydrogen tanks to the hydrogen consumer by prioritizing supply of hydrogen from the first hydrogen tank in response to the received maintenance instruction; and determining, by the processing circuitry, the gas pressure of the first hydrogen tank, and controlling, by the processing circuitry, a hydrogen supply valve for the first hydrogen tank to close in response to the determined gas pressure being below a predetermined supply pressure threshold, to prevent further supply of hydrogen from the first hydrogen tank to the hydrogen consumer.

Example 17. The method of example 16, further comprising: controlling, by the processing circuitry, the refueling of hydrogen to the first hydrogen tank in response to the received maintenance instruction.

Example 18. The method of example 17, further comprising: closing, by the processing circuitry, a refueling valve for the first hydrogen tank in order to control the refueling of hydrogen to the first hydrogen tank.

Example 19. A computer program product comprising program code for performing, when executed by the processing circuitry, the method of any of examples 16-18.

Example 20. A non-transitory computer-readable storage medium comprising instructions, which when executed by the processing circuitry, cause the processing circuitry to perform the method of any of examples 16-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (17) comprising processing circuitry (18) configured to:
- receive a maintenance instruction (190) for a first hydrogen tank (105a) of a vehicle (1), the first hydrogen tank (105a) being one of a plurality of hydrogen tanks (105) configured to supply hydrogen to a hydrogen consumer (10) of the vehicle (1),
- in response to the received maintenance instruction (190), control the supply of hydrogen from the plurality of hydrogen tanks (105) to the hydrogen consumer (10) by prioritizing supply of hydrogen from the first hydrogen tank (105a), and
- determine the gas pressure of the first hydrogen tank (105a), and in response to the determined gas pressure being below a predetermined supply pressure threshold, control a hydrogen supply valve (181) for the first hydrogen tank (105a) to close to prevent further supply of hydrogen from the first hydrogen tank (105a) to the hydrogen consumer (10).

2. The computer system (17) of claim 1, wherein the processing circuitry (18) is further configured to: prioritize supply of hydrogen from the first hydrogen tank (105a) in response to the determined gas pressure of the first hydrogen tank (105a) being above the predetermined supply pressure threshold.

3. The computer system (17) of any of claims 1-2, wherein the processing circuitry (18) is further configured to: prioritize supply of hydrogen from the first hydrogen tank (105a) by performing a preventive action for supplying hydrogen from the plurality of hydrogen tanks (105b, 105c) other than the first hydrogen tank (105a) to the hydrogen consumer (10).

4. The computer system (17) of claim 3, wherein the processing circuitry (18) is further configured to: perform the preventive action by controlling one or more hydrogen supply valves (182, 183) of the plurality of hydrogen tanks (105b, 105c) other than the first hydrogen tank (105a) to close, or at least partly close, to prevent or at least reduce the supply of hydrogen from the plurality of hydrogen tanks (105b, 105c) other than the first hydrogen tank (105a).

5. The computer system (17) of claim 4, wherein the processing circuitry (18) is further configured to: perform the preventive action until the gas pressure of the first hydrogen tank (105a) is below the predetermined supply pressure threshold.

6. The computer system (17) of any of claims 1-5, wherein the processing circuitry (18) is further configured to: in response to the determined gas pressure of the first hydrogen tank (105a) being below the predetermined supply pressure threshold, control one or more hydrogen supply valves (182, 183) of the plurality of hydrogen tanks (105b, 105c) other than the first hydrogen tank (105a) to open to supply hydrogen from the plurality of hydrogen tanks (105a, 105b) other than the first hydrogen tank (105a) to the hydrogen consumer (10).

7. The computer system (17) of any of claims 1-6, wherein the processing circuitry (18) is further configured to: in response to the determined gas pressure being below the predetermined supply pressure threshold and above a predetermined venting pressure threshold, control a venting valve (185) for the first hydrogen tank (105a) to open to vent residual hydrogen from the first hydrogen tank (105a) to the atmosphere.

8. The computer system (17) of claim 7, wherein the processing circuitry (18) is further configured to: receive a safe venting instruction (192), and in response to the received safe venting instruction (192), control the venting valve (185) for the first hydrogen tank (105a) to open.

9. The computer system (17) of any of claims 1-8, wherein the processing circuitry (18) is further configured to: in response to the received maintenance instruction, control the refueling of hydrogen to the first hydrogen tank (105a).

10. The computer system (17) of claim 9, wherein the processing circuitry (18) is further configured to: control the refueling of hydrogen to the first hydrogen tank (105a) by closing a refueling valve (181, 184) for the first hydrogen tank (105a).

11. The computer system (17) of claim 10, wherein the refueling valve (181) and hydrogen supply valve (181) for the first hydrogen tank (105a) are forming a combined valve (181).

12. A vehicle (1) comprising the computer system (17) of any of claims 1-11.

13. A computer-implemented method, comprising:
- receiving (S10), by a processing circuitry of a computer system, a maintenance instruction for a first hydrogen tank of a vehicle, the first hydrogen tank being one of a plurality of hydrogen tanks configured to supply hydrogen to a hydrogen consumer of the vehicle,
- controlling (S20), by the processing circuitry, the supply of hydrogen from the plurality of hydrogen tanks to the hydrogen consumer by prioritizing supply of hydrogen from the first hydrogen tank in response to the received maintenance instruction, and
- determining (S30), by the processing circuitry, the gas pressure of the first hydrogen tank, and controlling (S40), by the processing circuitry, a hydrogen supply valve for the first hydrogen tank to close in response to the determined gas pressure being below a predetermined supply pressure threshold, to prevent further supply of hydrogen from the first hydrogen tank to the hydrogen consumer.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

## Patentansprüche

1. Computersystem (17), das einen Verarbeitungsschaltkreis (18) umfasst, der für Folgendes konfiguriert ist:
- Empfangen einer Wartungsanweisung (190) für einen ersten Wasserstofftank (105a) eines Fahrzeugs (1), wobei der erste Wasserstofftank (105a) einer aus einer Vielzahl von Wasserstofftanks (105) ist, die dazu konfiguriert sind, einem Wasserstoffverbraucher (10) des Fahrzeugs (1) Wasserstoff zuzuführen,
- als Reaktion auf die empfangene Wartungsanweisung (190), Steuern der Zufuhr von Wasserstoff aus der Vielzahl von Wasserstofftanks (105) zum Wasserstoffverbraucher (10), indem die Zufuhr von Wasserstoff aus dem ersten Wasserstofftank (105a) priorisiert wird, und
- Bestimmen des Gasdrucks des ersten Wasserstofftanks (105a), und als Reaktion darauf, dass der bestimmte Gasdruck unter einem vorbestimmten Zufuhrdruck-Schwellenwert liegt, Steuern eines Wasserstoffzufuhrventils (181) für den ersten Wasserstofftank (105a), so dass es sich schließt, um eine weitere Zufuhr von Wasserstoff aus dem ersten Wasserstofftank (105a) zum Wasserstoffverbraucher (10) zu verhindern.

2. Computersystem (17) nach Anspruch 1, wobei der Verarbeitungsschaltkreis (18) ferner dazu konfiguriert ist, die Zufuhr von Wasserstoff aus dem ersten Wasserstofftank (105a) als Reaktion darauf zu priorisieren, dass der bestimmte Gasdruck des ersten Wasserstofftanks (105a) über dem vorbestimmten Zufuhrdruck-Schwellenwert liegt.

3. Computersystem (17) nach einem der Ansprüche 1-2, wobei der Verarbeitungsschaltkreis (18) ferner dazu konfiguriert ist, die Zufuhr von Wasserstoff aus dem ersten Wasserstofftank (105a) zu priorisieren, indem eine Vorbeugungsmaßnahme zum Zuführen von Wasserstoff aus der Vielzahl von Wasserstofftanks (105b, 105c), außer aus dem ersten Wasserstofftank (105a), an den Wasserstoffverbraucher (10) durchgeführt wird.

4. Computersystem (17) nach Anspruch 3, wobei der Verarbeitungsschaltkreis (18) ferner dazu konfiguriert ist, die Vorbeugungsmaßnahme durchzuführen, indem ein oder mehrere Wasserstoffzufuhrventile (182, 183) der Vielzahl von Wasserstofftanks (105b, 105c), außer des ersten Wasserstofftanks (105a), gesteuert werden, so dass sie sich schließen oder mindestens teilweise schließen, um die Zufuhr von Wasserstoff aus der Vielzahl von Wasserstofftanks (105b, 105c), außer aus dem ersten Wasserstofftank (105a), zu verhindern oder mindestens zu reduzieren.

5. Computersystem (17) nach Anspruch 4, wobei der Verarbeitungsschaltkreis (18) ferner dazu konfiguriert ist, die Vorbeugungsmaßnahme durchzuführen, bis der Gasdruck des ersten Wasserstofftanks (105a) unter dem vorbestimmten Zufuhrdruck-Schwellenwert liegt.

6. Computersystem (17) nach einem der Ansprüche 1-5, wobei der Verarbeitungsschaltkreis (18) ferner dazu konfiguriert ist, als Reaktion darauf, dass der bestimmte Gasdruck des ersten Wasserstofftanks (105a) unter dem vorbestimmten Zufuhrdruck-Schwellenwert liegt, ein oder mehrere Wasserstoffzufuhrventile (182, 183) der Vielzahl von Wasserstofftanks (105b, 105c), außer des ersten Wasserstofftanks (105a), zu steuern, so dass sie sich öffnen, um dem Wasserstoffverbraucher (10) Wasserstoff aus der Vielzahl von Wasserstofftanks (105a, 105b), außer aus dem ersten Wasserstofftank (105a), zuzuführen.

7. Computersystem (17) nach einem der Ansprüche 1-6, wobei der Verarbeitungsschaltkreis (18) ferner dazu konfiguriert ist, als Reaktion darauf, dass der bestimmte Gasdruck unter dem vorbestimmten Zufuhrdruck-Schwellenwert und über einem vorbestimmten Ablassdruck-Schwellenwert liegt, ein Ablassventil (185) für den ersten Wasserstofftank (105a) zu steuern, so dass es sich öffnet, um Restwasserstoff aus dem ersten Wasserstofftank (105a) in die Atmosphäre abzulassen.

8. Computersystem (17) nach Anspruch 7, wobei der Verarbeitungsschaltkreis (18) ferner dazu konfiguriert ist, eine Anweisung zum sicheren Ablassen (192) zu empfangen und als Reaktion auf die empfangene Anweisung zum sicheren Ablassen (192) das Ablassventil (185) für den ersten Wasserstofftank (105a) zu steuern, so dass es sich öffnet.

9. Computersystem (17) nach einem der Ansprüche 1-8, wobei der Verarbeitungsschaltkreis (18) ferner dazu konfiguriert ist, als Reaktion auf die empfangene Wartungsanweisung das Auftanken des ersten Wasserstofftanks (105a) mit Wasserstoff zu steuern.

10. Computersystem (17) nach Anspruch 9, wobei der Verarbeitungsschaltkreis (18) ferner dazu konfiguriert ist, das Auftanken des ersten Wasserstofftanks (105a) mit Wasserstoff zu steuern, indem ein Betankungsventil (181, 184) für den ersten Wasserstofftank (105a) geschlossen wird.

11. Computersystem (17) nach Anspruch 10, wobei das Betankungsventil (181) und das Wasserstoffzufuhrventil (181) für den ersten Wasserstofftank (105a) ein Kombinationsventil (181) bilden.

12. Fahrzeug (1), das das Computersystem (17) nach einem der Ansprüche 1-11 umfasst.

13. Computerimplementiertes Verfahren, umfassend:
- Empfangen (S10) einer Wartungsanweisung für einen ersten Wasserstofftank eines Fahrzeugs durch einen Verarbeitungsschaltkreis eines Computersystems, wobei der erste Wasserstofftank einer aus einer Vielzahl von Wasserstofftanks ist, die dazu konfiguriert sind, einem Wasserstoffverbraucher des Fahrzeugs Wasserstoff zuzuführen,
- Steuern (S20) der Zufuhr von Wasserstoff aus der Vielzahl von Wasserstofftanks zum Wasserstoffverbraucher durch den Verarbeitungsschaltkreis, indem die Zufuhr von Wasserstoff aus dem ersten Wasserstofftank priorisiert wird, als Reaktion auf die empfangene Wartungsanweisung, und
- Bestimmen (S30) des Gasdrucks des ersten Wasserstofftanks durch den Verarbeitungsschaltkreis, und als Reaktion darauf, dass der bestimmte Gasdruck unter einem vorbestimmten Zufuhrdruck-Schwellenwert liegt, Steuern (S40) eines Wasserstoffzufuhrventils für den ersten Wasserstofftank durch den Verarbeitungsschaltkreis, so dass es sich schließt, um eine weitere Zufuhr von Wasserstoff aus dem ersten Wasserstofftank zum Wasserstoffverbraucher zu verhindern.

14. Computerprogrammprodukt, das einen Programmcode umfasst, um bei Ausführung durch den Verarbeitungsschaltkreis das Verfahren nach Anspruch 13 durchzuführen.

15. Nichtflüchtiges, computerlesbares Speichermedium, das Anweisungen umfasst, die, wenn sie durch den Verarbeitungsschaltkreis ausgeführt werden, den Verarbeitungsschaltkreis dazu veranlassen, das Verfahren nach Anspruch 13 durchzuführen.

## Revendications

1. Système informatique (17) comprenant un circuit de traitement (18) configuré pour :
- recevoir une instruction d'entretien (190) pour un premier réservoir d'hydrogène (105a) d'un véhicule (1), le premier réservoir d'hydrogène (105a) étant l'un d'une pluralité de réservoirs d'hydrogène (105) configurés pour fournir de l'hydrogène à un consommateur d'hydrogène (10) du véhicule (1),
- en réponse à l'instruction d'entretien reçue (190), commander l'alimentation en hydrogène provenant de la pluralité de réservoirs d'hydrogène (105) vers le consommateur d'hydrogène (10) en donnant la priorité à l'alimentation en hydrogène provenant du premier réservoir d'hydrogène (105a), et
- déterminer la pression de gaz du premier réservoir d'hydrogène (105a) et, en réponse au fait que la pression de gaz déterminée est inférieure à un seuil de pression d'alimentation prédéterminé, commander la fermeture d'une vanne d'alimentation en hydrogène (181) pour le premier réservoir d'hydrogène (105a) afin d'empêcher la poursuite de l'apport d'hydrogène du premier réservoir d'hydrogène (105a) au consommateur d'hydrogène (10).

2. Système informatique (17) selon la revendication 1, dans lequel le circuit de traitement (18) est en outre configuré pour : donner la priorité à l'alimentation en hydrogène à partir du premier réservoir d'hydrogène (105a) en réponse au fait que la pression de gaz déterminée du premier réservoir d'hydrogène (105a) est supérieure au seuil de pression d'alimentation prédéterminé.

3. Système informatique (17) selon l'une quelconque des revendications 1 et 2, dans lequel le circuit de traitement (18) est en outre configuré pour : donner la priorité à l'alimentation en hydrogène à partir du premier réservoir d'hydrogène (105a) en exécutant une action préventive pour fournir de l'hydrogène à partir de la pluralité de réservoirs d'hydrogène (105b, 105c) autres que le premier réservoir d'hydrogène (105a) au consommateur d'hydrogène (10).

4. Système informatique (17) selon la revendication 3, dans lequel le circuit de traitement (18) est en outre configuré pour : effectuer l'action préventive en commandant une ou plusieurs vannes d'alimentation en hydrogène (182, 183) de la pluralité de réservoirs d'hydrogène (105b, 105c) autres que le premier réservoir d'hydrogène (105a) pour fermer, ou au moins fermer partiellement, pour empêcher ou au moins réduire l'alimentation en hydrogène de la pluralité de réservoirs d'hydrogène (105b, 105c) autres que le premier réservoir d'hydrogène (105a).

5. Système informatique (17) selon la revendication 4, dans lequel le circuit de traitement (18) est en outre configuré pour : exécuter l'action préventive jusqu'à ce que la pression de gaz du premier réservoir d'hydrogène (105a) soit inférieure au seuil de pression d'alimentation prédéterminé.

6. Système informatique (17) selon l'une quelconque des revendications 1 à 5, dans lequel le circuit de traitement (18) est en outre configuré pour : en réponse au fait que la pression de gaz déterminée du premier réservoir d'hydrogène (105a) est inférieure au seuil de pression d'alimentation prédéterminé, commander une ou plusieurs vannes d'alimentation en hydrogène (182, 183) de la pluralité de réservoirs d'hydrogène (105b, 105c) autres que le premier réservoir d'hydrogène (105a) pour qu'elles s'ouvrent afin de fournir de l'hydrogène à partir de la pluralité de réservoirs d'hydrogène (105a, 105b) autres que le premier réservoir d'hydrogène (105a) au consommateur d'hydrogène (10).

7. Système informatique (17) selon l'une quelconque des revendications 1 à 6, dans lequel le circuit de traitement (18) est en outre configuré pour : en réponse au fait que la pression de gaz déterminée est inférieure au seuil prédéterminé de pression d'alimentation et supérieure à un seuil prédéterminé de pression de ventilation, commander une vanne de ventilation (185) pour que le premier réservoir d'hydrogène (105a) s'ouvre pour évacuer l'hydrogène résiduel du premier réservoir d'hydrogène (105a) vers l'atmosphère.

8. Système informatique (17) selon la revendication 7, dans lequel le circuit de traitement (18) est en outre configuré pour : recevoir une instruction de ventilation de sécurité (192) et, en réponse à l'instruction de ventilation de sécurité reçue (192), commander la vanne de ventilation (185) pour que le premier réservoir d'hydrogène (105a) s'ouvre.

9. Système informatique (17) selon l'une quelconque des revendications 1 à 8, dans lequel le circuit de traitement (18) est en outre configuré pour : en réponse à l'instruction d'entretien reçue, commander le ravitaillement en hydrogène du premier réservoir d'hydrogène (105a).

10. Système informatique (17) selon la revendication 9, dans lequel le circuit de traitement (18) est en outre configuré pour : commander le ravitaillement en hydrogène du premier réservoir d'hydrogène (105a) en fermant une vanne de ravitaillement (181, 184) pour le premier réservoir d'hydrogène (105a).

11. Système informatique (17) selon la revendication 10, dans lequel la vanne de ravitaillement (181) et la vanne d'alimentation en hydrogène (181) pour le premier réservoir d'hydrogène (105a) forment une vanne combinée (181).

12. Véhicule (1) comprenant le système informatique (17) selon l'une quelconque des revendications 1 à 11.

13. Procédé informatisé, comprenant les étapes consistant à :
- recevoir (S10), par un circuit de traitement d'un système informatique, une instruction d'entretien pour un premier réservoir d'hydrogène d'un véhicule, le premier réservoir d'hydrogène étant l'un d'une pluralité de réservoirs d'hydrogène configurés pour fournir de l'hydrogène à un consommateur d'hydrogène du véhicule,
- commander (S20), par le circuit de traitement, l'apport d'hydrogène par la pluralité de réservoirs d'hydrogène au consommateur d'hydrogène en donnant la priorité à l'alimentation en hydrogène du premier réservoir d'hydrogène en réponse à l'instruction d'entretien reçue, et
- déterminer (S30), par le circuit de traitement, la pression de gaz du premier réservoir d'hydrogène, et commander (S40), par le circuit de traitement, une vanne d'alimentation en hydrogène pour le premier réservoir d'hydrogène à fermer en réponse au fait que la pression de gaz déterminée est inférieure à un seuil de pression d'alimentation prédéterminé, afin d'empêcher la poursuite de l'apport d'hydrogène du premier réservoir d'hydrogène au consommateur d'hydrogène.

14. Produit de programme informatique comprenant un code de programme pour réaliser, lorsqu'il est exécuté par le circuit de traitement, le procédé selon la revendication 13.

15. Moyen de stockage non transitoire lisible par ordinateur comprenant des instructions qui, lorsqu'elles sont exécutées par le circuit de traitement, amènent le circuit de traitement à exécuter le procédé selon la revendication 13.
